# EUROPEAN PATENT APPLICATION

(11) **EP 2 594 835 A1**
(43) Date of publication of application: **22.05.2013**
(21) Application number: 12193016.8
(22) Date of filing: 16.11.2012
(51) Int. Cl.: F16L 23/10

(54) **Hybrid V-band coupling**

(30) Priority: 16.11.2011 US 201161560623 P; 15.11.2012 US 201213677589
(71) Applicant: Voss Industries, Inc., Cleveland, OH 44113 (US)
(72) Inventor: Fritskey, John F., Cleveland, OH Ohio 44136 (US); Orzech, James Michael, Twinsburg, OH Ohio 44087 (US)
(74) Representative: Bailey, David Martin

(57) **Abstract**

A hybrid sheet metal V-band coupling secures peripheral flanges (D) at mating ends of first and second coupling members (B, C) together. The coupling includes at least first and second V-retainers (10) disposed in end-to-end relation for circumferential receipt over substantially 360 degrees of the peripheral flanges (D) of the coupling members (B, C). A sheet metal member (20) engages the V-retainers (10), and a latch assembly (70) selectively secures the opposite ends of the sheet metal member. The sheet metal member (20) is integrally joined to the V-retainers (10), for example, by welding or riveting. The latch assembly (70) preferably includes ears (40, 50) formed from sheet metal that each include a first portion integrally secured (e.g., welded or riveted) to the sheet metal member and upturned second portions or lugs (42, 52).

## Description

### Background

This application claims the priority benefit of US provisional application Serial No. 61/560,623, filed November 16, 2012, the disclosure of which is expressly incorporated herein by reference.

The present disclosure relates to a coupling, and more particularly to what is referred to in the industry as a V-band coupling. More particularly, this disclosure relates to a more efficient way of manufacturing a coupling and resultant coupling which offers the flexibility of a sheet metal coupling with the robust design and enhanced features of a machined, rigid coupling.

Both sheet metal and machined rigid couplings have numerous uses. Generally, these types of couplings are used to join together or couple peripheral flanges located at adjacent ends of a pair of tubular members. A retaining member is provided as a part of a clamping device for coupling the peripheral flanges of the tubular members.

One problem with machined rigid couplings is the expense of labor, and waste material associated with manufacturing this type of product. For example, when starting with bar stock or extruded stock, portions of the coupling that extend radially outward from remaining portions of the coupling require the removal of a substantial amount of material if the radial outward portion is to be integrally formed with the remainder of the coupling. Thus, a substantial amount of material is sometimes required to be removed from the original stock material, and there is also the associated expense of the machining operation in order to remove the material.

Another problem is that rigid couplings typically have two machined halves held together by links. These rigid retainer halves when coupled together around a set of flanges can cause the flanges to distort, e.g. become oval. This can lead to potential leakage of the joint. In cases where a valve is contained between the two flanges, the coupling can distort the flanges, which can cause the valve to improperly open and close. This is undesirable, for example, in the bleed air systems of aircraft which is one use for couplings of this type.

In critical high pressure applications, it is desirable to have a V-band coupling which has a safety latch design in the event of a bolt failure. Sheet metal V-band couplings in general do not have a safety latch feature. Those V-band couplings which do have a safety latch feature are not nearly as robust as the latch used on rigid couplings. That being said, sheet metal V-band couplings that are equipped with a safety latch feature are generally used in lower pressure applications (less than 150 PSI). It is not uncommon for rigid couplings to encounter pressures in excess of 500 PSI. The rigid coupling latch assembly, as described in commonly owned US patent number 5,454,606, the disclosure of which is expressly incorporated herein by reference, is capable, tested, and proven in high pressure applications.

Consequently, a need exists for a sheet metal coupling that exhibits selected robust and enhanced features of a machined rigid coupling.

### Brief Description

A hybrid V-band coupling according to the present disclosure is defined in Claim 1.

More particularly, the coupling includes a sheet metal member or band which is generally formed to a diameter required for the particular coupling size. The band is received around V-retainers which have a generally V-shaped conformation adapted for receipt over respective flanges of mating tube ends.

In one preferred arrangement, more than one V-retainer is provided, for example three separate V-retainers are provided in which each extends over approximately 120° of the perimeter of the abutting flanges. The sheet metal band is then integrally joined to the individual V-retainers. For example, the outer band may be riveted or welded (e.g. spot welded) preferably at spaced outer surface regions or circumferential locations of the V-retainers to join the outer band to the separate V-retainers.

Suitably, two sheet metal ears are provided and first portions of each of the ears are formed into a generally U-shaped lug at one end of the sheet metal band. The ears are used in place of more expensive, machined-style ears found on rigid couplings. The formed sheet metal ears are then riveted or spot welded, one to each end of the sheet metal band.

In a preferred arrangement, the sheet metal band is preferably roll-formed, and the ears are also press-formed with the lugs integrally formed therewith.

The sheet metal roll-formed retainers are then secured or assembled (e.g. riveted or spot welded) to the band/ear assembly. The eyebolt and latch assembly are then riveted to one of the formed retainer ears. After riveting, the latch assembly is then free to move and clasp the mating sheet-metal formed ear (lug) on the opposite end of the sheet metal band. The lugs of the other ear preferably include raised embossments incorporated therein that cooperate with a recess or slot in the latch assembly which eliminates fasteners that are otherwise conventionally used.

This hybrid design of a V-band coupling that includes a robust latch assembly is capable of sealing high-pressure air in an effective and efficient manner. Being an all sheet metal formed design lends to ease of manufacture. Likewise, the all sheet metal assembly eliminates expensive machining operations and waste of material. Instead, the sheet metal band and three roll-formed retainers wrap around the two mating flange ends instead of becoming oval or distorting the mating flanges of the tube ends as does the two segment rigid coupling. Having the ability to incorporate the latch assembly from the more robust rigid coupling into a sheet metal coupling allows this modified or hybrid coupling the ability to function at the same level as the more expensive, all machined rigid coupling.

The present invention also provides a method of forming a hybrid sheet metal V-band coupling for securing together associated first and second coupling members which each include a peripheral flange at an end, which method includes providing at least first and second V-retainers in end-to-end relation. The method further includes engaging a separate sheet metal member to outer portions of the at least first and second V-retainers, and supplying a latch assembly for selectively securing together opposite ends of the sheet metal member.

The new design of the V-band coupling is less expensive to manufacture than prior arrangements.

Another advantage is that the hybrid V-band coupling can be used in higher pressure applications.

Yet another benefit is the elimination of fasteners (drive screws) by incorporating embossments into one ear of the assembly. Still other benefits and advantages will become apparent upon reading and understanding the following detailed description.

### Brief Description of the Drawings

The above and other aspects of the invention will now be described in further detail, by way of example only, with reference to the accompanying drawings, in which:
Figure 1 is an exploded perspective view of a joint of a conventional rigid V-shape retainer coupling assembly.
Figure 2 is a perspective view of a first embodiment of a hybrid V-band coupling of the present disclosure.
Figure 3 is another perspective view of the first embodiment of the hybrid V-band V-band coupling.
Figure 4 is a front view of the hybrid V-band coupling.
Figure 5 is a left-hand side view of the hybrid V-band coupling of Figure 4.
Figure 6 is a right-hand side view of the hybrid V-band coupling of Figure 4.
Figure 7 is a top view of the hybrid V-band coupling of Figure 4.
Figure 8 is a bottom view of the hybrid V-band coupling of Figure 4.
Figure 9 is a perspective view of the coupling of Figure 2 incorporating selected aspects of the patented latch assembly assembled and clasped onto sheet metal formed ears which are riveted to the generally circular outer band.
Figure 10 is still another perspective view showing a top side of the latch assembly and a detailed view of the sheet-metal formed eyebolt ear which is secured (i.e. riveted) to the outer circular band.
Figure 11 is a perspective view of one of the ears that includes at least one raised embossment for securing the latch assembly, with selected components of the latch assembly broken away for ease of illustration.

### Detailed Description

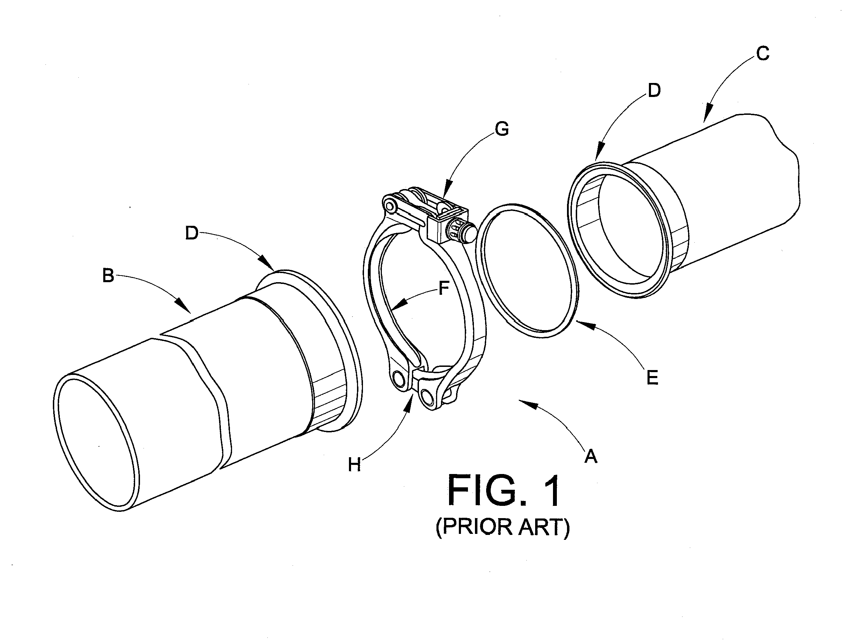

Turning first to Figure 1, there is shown a conventional rigid coupling assembly A used for securing a pair of flanged ducts or tubular members B, C. Each of the tubular members B, C includes a flange D disposed adjacent a terminal end. The ends of the tubular members, and thus the individual flanges D, are brought into aligned, abutting relation and held in place by rigid V-retainers F (two rigid retainers in this instance) which are a part of the coupling assembly A. Oftentimes, a seal E is mainly received between the flanged ends of the tubular members. A latch assembly G secures first ends of the V-retainers F together, and second ends of the V-retainers are joined by a link assembly H. The conventional safety latch assembly includes a latch or saddle having a first leg, a second leg, and a connecting base wall. A trunnion washer or saddle block is secured via a fastener in the latch adjacent the sidewall thereof. An eyebolt is pivotally secured to the first retainer half, second end lug or eyebolt lug, such that a first end of the eyebolt is fastened between the pair of legs of the lug by a cross pin extending transversely through the two legs of the lug. A retaining washer is located at each end of the pin. The washer serves to slidably and rotatably secure the latch to the eyebolt. Each end of the pin extends through a respective one of the first and second legs of the latch. Washers enable the latch to be slidably and rotatably secured to the lug. More particular details of the structure and function of this latch assembly are shown and described in commonly owned US Patent 5,454,606.

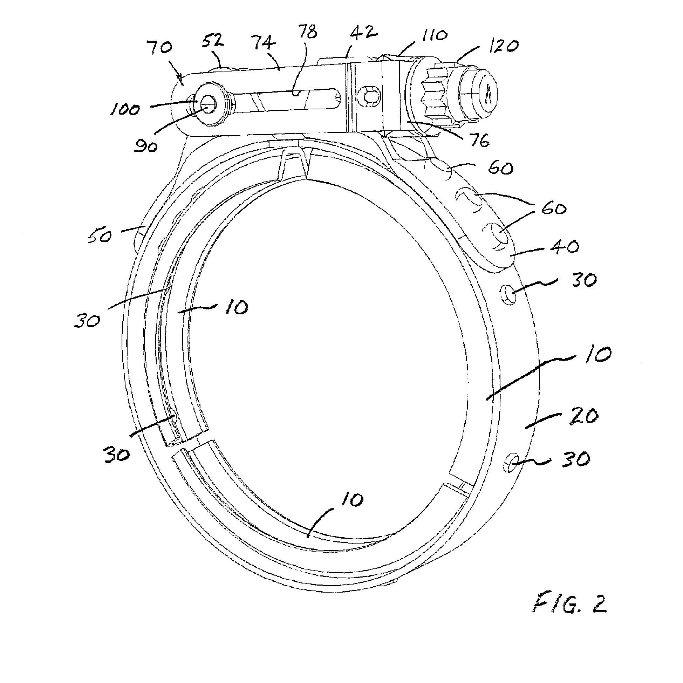

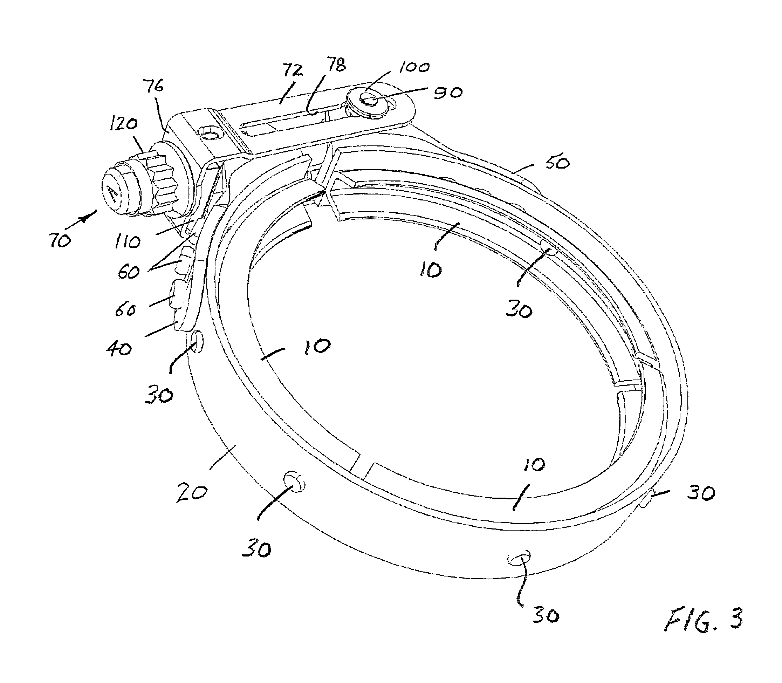

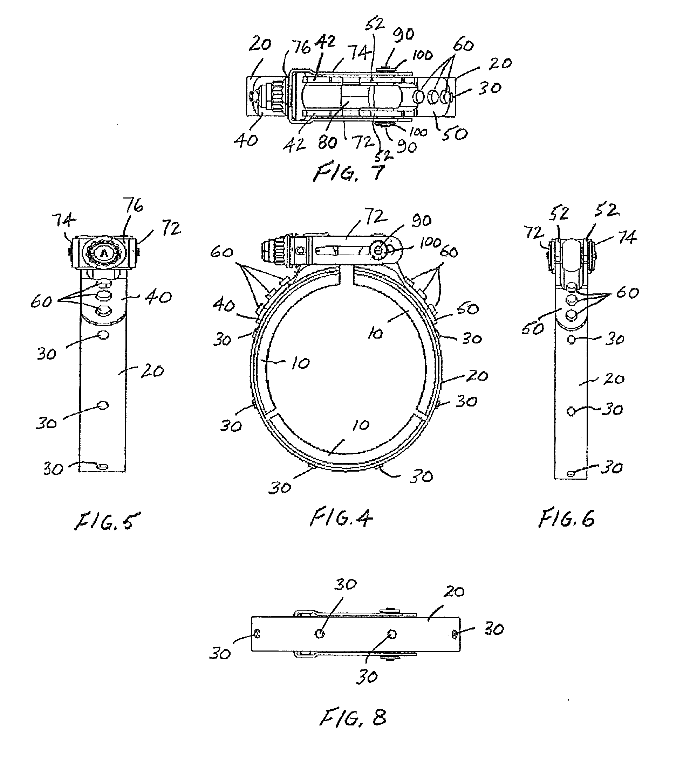

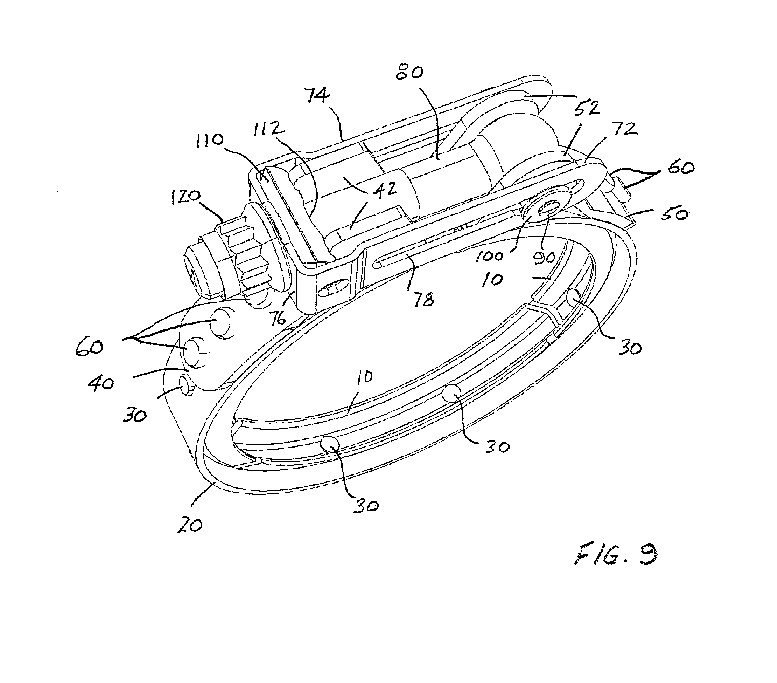

In Figures 2-10, three V-retainers 10 are dimensioned to capture the perimeter flanges of the adjacent tubular members (not shown). Each of the V-retainers 10 extends over approximately 120°. Also, a greater or lesser number of individual V-retainers 10 could be used without departing from the scope and intent of the present disclosure. The V-retainers 10 are conventional structures and are typically roll-formed into an inverted, generally v-shape in cross-section where edges on either side of the vertex are dimensioned to abut against the flanges of the tubular members as is well known in the art. Of course, modifications or use of alternative configurations of V-retainers may be used without departing from the scope and intent of the present disclosure. Further, each V-retainer 10 is bent into an arcuate shape that forms a portion of the total circumferential conformation. Here, at least two and preferably three V-retainers are used and each is preferably identical to the other V-retainers, for example, for ease of manufacture, inventory, etc. Thus, the illustrated embodiment includes three V-retainers that each extend over approximately one hundred twenty degrees (120°) when oriented end-to-end. Of course the arcuate extent of a V-retainer may vary as the number of V-retainers that are joined together is varied.

A roll-formed sheet metal member or strip forming an outer band 20 encompasses or engages the individual V-retainers 10 and is preferably integrally or fixedly secured to an outer surface region(s) of each of the V-retainers 10. Suitable fasteners such as rivets or spot welds 30 are provided at circumferentially-spaced locations of the outer band and secure the outer band 20 to the V-retainers 10. As shown, an inner surface of the band 20 abuts along the outer surface or perimeter of each V-retainer, particularly along a surface of each V-retainer that is substantially opposite the vertex.

Ears 40, 50 are, in turn, fastened to the outer band 20, and preferably adjacent terminal ends of the outer band. The ears 40, 50 have a first portion that conforms to the outer band, i.e., having an arcuate shape for receipt on outer surface portions of the outer band. Along this first portion of the ears, fasteners such as rivets or spot welds 60 secure the ears 40, 50 to the outer band 20 and more particularly to the opposite ends of the outer band.

In addition, terminal ends of the ears 40, 50 are formed into generally U-shaped portions or lugs 42, 52 (generally U-shape in cross-section) such as through a forming process. These lugs 42, 52 are received in and form a part of a latch assembly 70 that includes first and second legs 72, 74 interconnected at one end by a base wall 76. More particularly, the lugs are preferably received between the first and second legs 72, 74 of the latch assembly. Each of the legs 72, 74 has an elongated slot 78 for securing an eyebolt 80 in selectively pivoting relation relative to the legs. Specifically, the eyebolt 80 is mounted to the legs 72, 74 via a cross pin 90 that extends through one end of the eyebolt, through openings in lugs 52, and the cross pin has outer ends dimensioned to extend though the slots 78. Outermost ends of the cross pin 90 are deformed or peened over washers 100 that are received over the cross pin and locate the latch assembly for rotating movement around a rotational axis through the lugs 52 defined by the cross pin, and also for sliding movement along the elongated slots 78 as the lugs 42, 52 of the respective ears are urged toward one another as the latch assembly is tightened.

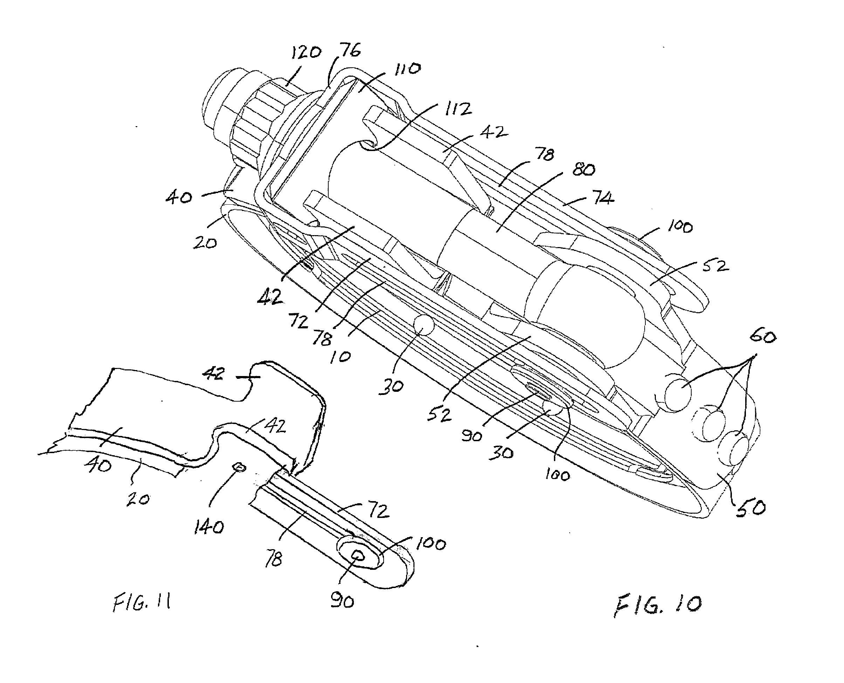

At one end of the latch assembly opposite the cross pin 90, a trunnion washer or saddle block 110 is provided and forms an abutment surface for fastening nut 120 received on threaded eyebolt 80. An opening 112 is provided through the trunnion washer 110 and aligned with a similar opening in the base wall 76. The aligned openings 76, 112 receive the threaded end of the eyebolt 80, and by tightening the fastening nut 120 on the threaded end of the eyebolt, the trunnion washer 110 engages the lugs 42, and the lugs 42, 52 provided on opposite ends of the outer band are drawn together or urged toward one another in order to draw the outer band 20 tightly against the outer periphery of the V-shaped retainers 10, which in turn engage or clamp around the flanges of the respective tubular members B, C. As particularly illustrated in Figure 11, each of the lugs of the ears 42 includes a raised embossment 140 that extends outwardly therefrom and each is received in a respective elongated slot 78 of the legs 72, 74 for sliding movement in the slots as the latch assembly is tightened. The incorporation of the embossments replicates the form and function of a pair of fasteners or drive screws that are conventionally used in this type of latch assembly for a rigid coupling. The embossments eliminate the need for the drive screws, thus reducing inventory, and manufacturing and assembly costs associated with the drive screws. In prior arrangements, the drive screws can work loose if not properly pressed into place during original assembly. The provision of the embossments 140 eliminates these extra components, and also advantageously reduces assembly time since the embossments are integrally incorporated into the lugs 42 of the ear 40. Although only one of the lugs 42 is shown with the embossment, one skilled in the art will appreciate that both lugs preferably include an embossment.

The outer band 20 is preferably formed from sheet-like material and by securing the outer band via rivets, spot welds, or the like 30 to the V-retainers 10, when the free ends of the outer band are urged or drawn toward one another, the outer band likewise draws the V-retainers into tight, peripheral gripping engagement with the flanges of the ends of the tubular members B, C. Further, since the ears 40, 50 may be formed from planar stock material which is then subsequently joined to or fastened by rivets or welding 60 to the outer band 20, with integrally formed lugs 42, 52 at one end, the latch assembly 70 that is typically employed in a rigid coupling arrangement can be advantageously used in this sheet metal, band coupling environment. Forming the V-retainers 10, outer band 20, and the ears 40 as separate components (and more preferably forming each from planar stock material that is formed or roll-formed into the desired shapes or conformations) that are subsequently joined together, for use with a latch assembly typically used in high pressure environments only, results in a hybrid V-band coupling that is less expensive to manufacture and can be used in higher pressure applications than are typically encountered with a sheet metal coupling.

This disclosure is been described with reference to a preferred embodiment. Obviously, modifications and alterations will occur to others upon reading and understanding the specification. This disclosure is intended to include all such modifications and alterations.

## Claims

1. A hybrid sheet metal V-band coupling for securing associated first and second coupling members (B, C) which each include a peripheral flange (D) at an end, the hybrid sheet metal V-band coupling comprising:
at least first and second V-retainers (10) disposed in end-to-end relation for circumferential receipt over substantially 360 degrees of the associated peripheral flanges of the associated first and second coupling members;
a sheet metal member (20) operatively engaging the at least first and second V-retainers (10); and
a latch assembly (70) for selectively securing the opposite ends of the sheet metal member (20).

2. A coupling as claimed in claim 1 wherein the sheet metal member (20) is integrally secured to the at least first and second V-retainers (10).

3. A coupling as claimed in claim 2 wherein the sheet metal member (20) is either riveted or welded to each of the at least first and second V-retainers (10) at circumferentially spaced locations.

4. A coupling as claimed in any one of claims 1 to 3 wherein the latch assembly (70) includes first and second sheet metal ears (40, 50) at respective first and second ends of the sheet metal member (20), each ear including a generally u-shaped lug (42, 52).

5. A coupling as claimed in claim 4 wherein the sheet metal ears (40, 50) are integrally joined to the sheet metal member (20).

6. A coupling as claimed in claim 5 wherein the sheet metal ears (40, 50) are either welded or riveted to the sheet metal member (20).

7. A method of forming a hybrid sheet metal V-band coupling for securing associated first and second coupling members (B, C) which each include a peripheral flange (D) at an end, the method comprising:
providing at least first and second V-retainers (10);
aligning the at least first and second V-retainers (10) in end-to-end relation;
engaging a separate sheet metal member (20) to the at least first and second V-retainers (10); and
supplying a latch assembly (70) for selectively securing together opposite ends of the sheet metal member (20).

8. A method as claimed in claim 7 wherein the V-retainer providing step includes providing first, second, and third V-retainers (10) that each extend over substantially 120 degrees for circumferential receipt over the associated first and second coupling members (B, C).

9. A method as claimed in claim 7 or claim 8 wherein the engaging step includes welding or riveting the sheet metal member (20) to the at least first and second V-retainers (10).

10. A method as claimed in any one of claims 7 to 9 wherein the engaging step includes securing the sheet metal member (20) to circumferentially spaced locations of the at least first and second V-retainers (10).

11. A method as claimed in any one of claims 7 to 10 wherein the latch supplying step includes providing separate first and second ears (40, 50) joined to respective first and second ends of the sheet metal member (20).

12. A method as claimed in claim 11 wherein the ear providing step includes one of welding or riveting the first and second ears (40, 50) to the respective ends of the sheet metal member (20).

13. A method as claimed in claim 11 or claim 12 wherein the ear providing step includes bending a portion of each ear (40, 50) into a generally u-shaped lug (42, 52) at opposite ends of the sheet metal band.
